(19) Europäisches Patentamt
European Patent Office
Office européen des brevets

(11) Veröffentlichungsnummer : **0 019 837**
**B1**

# (12) EUROPÄISCHE PATENTSCHRIFT

(45) Veröffentlichungstag der Patentschrift : **26.01.83**

(51) Int. Cl.³ : **D 06 M 15/66**, C 08 G 77/38

(21) Anmeldenummer : **80102792.1**

(22) Anmeldetag : **21.05.80**

(54) **Verfahren zum Weichmachen von Textilmaterial, hierfür geeignete Mittel sowie das nach dem Verfahren behandelte Textilmaterial.**

(30) Priorität : **01.06.79 DE 2922376**

(43) Veröffentlichungstag der Anmeldung : **10.12.80 Patentblatt 80/25**

(45) Bekanntmachung des Hinweises auf die Patenterteilung : **26.01.83 Patentblatt 83/04**

(84) Benannte Vertragsstaaten : **AT BE CH FR GB IT LI NL SE**

(56) Entgegenhaltungen :
**FR A 2 276 338**
**FR A 2 354 372**
**FR A 2 355 945**
**US A 2 658 908**

(73) Patentinhaber : **Chemische Fabrik Pfersee GmbH**
**Färberstrasse 4**
**D-8900 Augsburg (DE)**

(72) Erfinder : **Deiner, Hans**
**Kuglerberg 13**
**D-8901 Neusäss 1 (DE)**
Erfinder : **Sandner, Bernhard**
**Ortlerweg 12**
**D-8901 Diedorf (DE)**

**EP 0 019 837 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Verfahren zum Weichmachen von Textilmaterial, hierfür geeignete Mittel sowie das nach dem Verfahren behandelte Textilmaterial

Die Erfindung betrifft das Weichmachen von Textilmaterial mit Alkoxylierungsprodukten. Diese sind erhältlich durch Alkoxylierung von Wasserstofforganopolysiloxanen mit einwertigen Alkoholen mit 4 bis 22 C-Atomen.

Es ist aus der DE-B 1 594 911 bekannt, Textilien mit Tetrakieselsäureestern langkettiger, ungesättigter Fettalkohole oder ihrer, eine Jodzahl von wenigstens 40 aufweisenden Gemische mit langkettigen, gesättigten Fettalkoholen zu behandeln. Eine solche Behandlung verleiht den Textilien einen weichen Griff und eine verbesserte Scheuer- und Einreißfestigkeit. Diese Kieselsäureester haben aber den Nachteil, daß sie hydrolytisch gespalten werden, nämlich dann, wenn die Produkte einen pH-Wert von unter 7 aufweisen. Dadurch ist eine Kombination dieser Ausrüstung mit z.B. der üblichen Knitterfreiausrüstung nur bedingt möglich. Auch werden die Effekte noch nicht in allen Fällen den heutigen Anforderungen gerecht.

Der vorliegenden Erfindung lag daher die Aufgabe zugrunde, Textilbehandlungsmittel zu finden, die weitestgehend hydrolysenstabil sind und den behandelten Textilien einen hervorragenden oberflächenglatten, weichen Griff verleihen und dabei gleichzeitig die Einreiß- und Scheuerfestigkeit weiter verbessern.

Gegenstand der Erfindung ist somit ein Verfahren zum Weichmachen von Textilmaterial durch Aufbringen von verdünnten Mitteln, die Alkoxylierungsprodukte enthalten, in Form von Lösungen in organischen Lösungsmitteln oder bevorzugt in Form wäßriger Emulsionen und Erhitzen des behandelten Textilmaterials, das dadurch gekennzeichnet ist, daß man Alkoxylierungsprodukte mit einer Vielzahl von Alkoxyresten einsetzt, die durch Alkoxylierung eines Wasserstofforganopolysiloxans mit mindestens einem einwertigen gesättigten und/oder ungesättigten Alkohol mit 4 bis 22 C-Atomen erhalten worden sind. Gegenstand der Erfindung sind weiterhin Mittel, die diese Alkoxylierungsprodukte in Form von Lösungen in organischen, wasserunlöslichen Lösungsmitteln oder, wiederum bevorzugt, in Form von wäßrigen Emulsionen enthalten und zur Durchführung des erfindungsgemäßen Verfahrens geeignet sind.

Die zur Herstellung der erfindungsgemäß verwendeten Alkoxylierungsprodukte eingesetzten Wasserstofforganopolysiloxane enthalten an Silicium gebundenen Wasserstoff. Als solche seien vor allem Alkylwasserstoffpolysiloxane, insbesondere Methyl-, aber auch Äthylwasserstoffpolysiloxane genannt. Daneben werden Cohydrolysate von hydrolysierbaren Silanen, welche an Silicium gebundene Wasserstoffatome enthalten, mit hydrolysierbaren Silanen, welche keine an Silicium gebundene Wasserstoffatome enthalten, als Ausgangssubstanzen verwendet. Das molare Verhältnis der Silane, welche an Silicium gebundene Wasserstoffatome enthalten, zu den Silanen, welche keine an Silicium gebundene Wasserstoffatome enthalten, kann dabei bis 1 : 6 betragen. Das mittlere Molekulargewicht dieser Polysiloxane liegt bei bis zu 12.000. Aus wirtschaftlichen Gründen werden aber die Alkylwasserstoffpolysiloxane mit einem Verhältnis von Alkylrest zu Wasserstoff (ohne Berücksichtigung der Endgruppen) von 1 : 1 und hier wiederum die Methylwasserstoffpolysiloxane bevorzugt zur Umsetzung herangezogen.

Als 2. Komponente zur Herstellung der Alkoxylierungsprodukte dienen gesättigte und/oder ungesättigte Alkohole mit 4 bis 22 C-Atomen, die sowohl geradkettig als auch verzweigtkettig sein können. Die Stellung der OH-Gruppe spielt dabei keine Rolle. Bevorzugt werden gesättigte Alkohole mit 4 bis 8 C-Atomen und besonders bevorzugt einfach oder mehrfach ungesättigte Alkohole mit 11 bis 18 C-Atomen verwendet. Die mit diesen hergestellten Alkoxylierungsprodukte sind nämlich flüssig, lassen sich also leicht handhaben und emulgieren und liefern ausgezeichnete Effekte, die bei den Alkoxylierungsprodukten mit dem langkettigen Alkenyloxyrest besonders deutlich ausgeprägt sind. Bei den Alkoxylierungsprodukten deren Alkenylgruppe 11 bis 18 C-Atome aufweist, ist dabei als weiterer Vorteil die erhöhte Wirtschaftlichkeit zu nennen, da bei diesen Produkten ein besonders günstiges Mengenverhältnis von Wasserstofforganopolysiloxan zu Fettalkohol resultiert.

Als Beispiele seien folgende Alkohole genannt: n-Butanol, i-Butanol, n-Hexanol, 2-Äthylbutanol-(1), n-Octanol, Octanol-(2), 2-Äthylhexanol-(1), Laurylalkohol, Hexadecanol-(1), Stearylalkohol, Bephenylalkohol, n-Undecen-(11)-ol(1), Oleylalkohol und Linoleylalkohol ($C_{17}H_{31}CH_2OH$).

Diese Alkohole werden in der Regel in technischer Qualität verwendet.

Die Alkoxylierung der Wasserstofforganopolysiloxane wird in bekannter Weise vorgenommen (vergleiche DE-C 896 414 und US-A 2 658 908, sowie JP-Patentanmeldung 72 09 424, referiert unter Accession-No. 19 816 T (1972) « Central Patents Index », Derwent Publications Limited, London). Im allgemeinen wird dabei so verfahren, daß der gesättigte und/oder ungesättigte Alkohol und der Katalysator, insbesondere eine basische Verbindung, vor allem Natriumalkoholat gelöst in Alkohol, vorgelegt werden und dann das Wasserstofforganopolysiloxan bei erhöhter Temperatur unter Rühren zugetropft wird. Gegebenenfalls kann zur Vervollständigung der Umsetzung nach Beendigung der Wasserstofforganopolysiloxanzugabe nochmals etwas Katalysator zugefügt werden. Wird der Alkohol im Unterschuß (siehe unten) verwendet, so wird zu Beginn nur ein Teil desselben vorgelegt und mit dem Wasserstofforganopolysiloxan umgesetzt und der Rest durch Zutropfen zusammen mit dem Wasserstofforganopolysiloxan zur Reaktion gebracht. Abschließend läßt man die Mischung noch bis zu 5 Stunden bei erhöhter Temperatur nachreagieren. Die Umsetzung zum Alkoxyalkylpolysiloxan läuft nach

folgendem Schema ab :

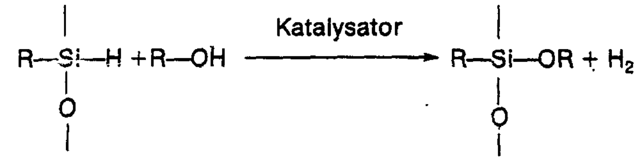


Die Umsetzung von Wasserstofforganopolysiloxan und gesättigtem und/oder ungesättigtem Alkohol erfolgt bevorzugt in einem Verhältnis von 0,75 bis 1, insbesondere 0,9 bis 1 Mol Alkohol je Äquivalent Si-H-Gruppe im Wasserstofforganopolydem bevorzugten Verhältnis sind somit mindestens 75 Mol %, bei siloxan. Bei dem besonders bevorzugten Verhältnis mindestens 90 Mol % der Wasserstoffatome des Wasserstofforganopolysiloxans alkoxyliert und es werden dann Produkte erhalten, die besonders effektstark sind und außerdem erhebliche wirtschaftliche Vorteile bieten. Alkoxylierungsprodukte, in denen weniger als 50 Mol % der H-Atome des Wasserstofforgano-polysiloxans alkoxyliert sind, sind für die Praxis ohne Bedeutung.

Die Anwendung der Alkoxylierungsprodukte wird bevorzugt aus wässriger Emulsion vorgenommen. Die Herstellung der Emulsionen erfolgt in bekannter Weise. Dabei werden die erfindungsgemäß als Textilbehandlungsmittel verwendeten Alkoxylierungsprodukte vorzugsweise direkt unter Zusatz von Emulgatoren in etwa 25 bis 45 %ige Emulsionen überführt (bezogen auf Alkoxylierungsprodukt). Man kann aber die Alkoxylierungsprodukte auch in Form einer Lösung in einem geeigneten organischen, wasserunlöslichen Lösungsmittel (Perchloräthylen, Butylacetat, Toluol, höhere Benzinfraktionen, Mischungen dieser Lösungsmittel usw.) emulgieren.

Auch die Emulgatoren sind bekannt. Bevorzugt werden, um Störungen bei der Kombination mit anderen Textilveredlungsmitteln von vornherein auszuschalten, nichtionogene Emulgatoren, z.B. Polyvinylalkohole in wäßriger Lösung, äthoxylierte Fettsäureamide, äthoxylierte Fettamine und äthoxylierte Fettalkohole verwendet. Daneben sind aber auch anionische und kationische Emulgatoren, z.B. quaternäre Ammoniumverbindungen, wie z.B. Octadecycloxymethylpyridiniumchlorid, oder Natriumsulfonate, wie z.B. Dodecylbenzol-Na-sulfonat, geeignet, wobei aber insbesondere bei der Kombination mit Katalysatoren für die Knitterfreiausrüstung, optischen Aufhellern und ähnlichen Verbindungen vorher die Verträglichkeit zu prüfen ist. Die genannten Emulgatoren sind vor allem für die Emulgierung von Organopolysiloxanen bekannt (siehe z.B. DE-A 1 060 347, US-A[1] 3 320 197, 3 729 437 und 3 748 275, sowie DE-A[2] 1 917 701). Auch die an Emulgatoren verwendeten Mengen bewegen sich im üblichen Rahmen, d.h. es werden etwa 2 bis 20, insbesondere 6 bis 15 Gew.%, bezogen auf Alkoxylierungsprodukt, eingesetzt.

Zur Behandlung der Textilien werden bevorzugt die wie beschrieben hergestellten wäßrigen Emulsionen verwendet, wobei denselben vor allem ein oberflächenglatter, weicher Griff verliehen und gleichzeitig die Einreißfestigkeit und Scheuerfestigkeit merklich erhöht wird. Auch die Vernähbarkeit der behandelten Textilien, insbesondere von Wirkware wird deutlich verbessert. Im allgemeinen werden von den wäßrigen Emulsionen der Alkoxylierungsprodukte je nach Konzentration und auszurüstender Ware 15 bis 70 g/l eingesetzt. Die Textilien werden mit den Flotten auf eine Flottenaufnahme von ca. 60 bis 100 % foulardiert und lediglich bei 80 bis 110 °C getrocknet. Selbstverständlich sind auch andere bekannte Auftragsmethoden, wie Sprühen und Pflatschen, geeignet, wobei die Einsatzmengen entsprechend der Flottenaufnahme zu variieren sind.

Daneben ist auch die Verwendung im organischen Lösungsmittel möglich. Dazu werden die Alkoxylierungsprodukte je nach Flottenaufnahme in geeigneten wasserunlöslichen Lösungsmitteln (siehe Absatz über die Herstellung der Emulsionen) in Mengen von 5 bis 40 g/l gelöst und in bekannter Weise durch Tauchen und Abpressen oder Sprühen behandelt.

Die beschriebene Behandlung kann ohne weiteres als solche vorgenommen werden. Bevorzugt aber werden dem Ausrüstungsbad noch andere, in der Textilindustrie übliche Hilfsmittel zugefügt, um den Textilien in einem Arbeitsgang eine Reihe von vorteilhaften Eigenschaften zu verleihen. Insbesondere seien hier Mittel hervorgehoben, mit welchen die Knitterfestigkeit verbessert werden kann. Daneben ist aber auch eine Kombination mit üblichen Fluorchemikalien sowie Hydrophobiermitteln möglich, wobei selbstverständlich bei Bedarf die dazugehörigen Katalysatoren zuzusetzen sind. Bei der kombinierten Ausrüstung sind geringere Mengen der Emulsionen, im allgemeinen 10 bis 50 g/l, vollkommen ausreichend. Die kombinierte Ausrüstung erfolgt ebenfalls in bekannter Weise, d.h. daß die behandelten Textilien abschließend von Fall zu Fall bei Temperaturen von 120 bis 160 °C einige Sekunden bis Minuten kondensiert werden müssen.

Bei der Lösungsmittelapplikation sind selbstverständlich nur entsprechend lösliche Zusatzprodukte geeignet.

Interessant ist auch der Einsatz der erfindungsgemäß verwendeten Mittel in der Beschichtung, und zwar dort, wo ein weicher Griff gefordert wird. Besonders bei der Rückenbeschichtung von Möbelbezugsstoffen können die Alkoxylierungsprodukte somit vorteilhaft eingesetzt werden. Die Beschichtung erfolgt dabei in bekannter Weise.

Erfindungsgemäß werden Textilien aller Art ausgerüstet. Als Textilien sind dabei insbesondere

gewebte und gewirkte Stoffe zu verstehen. Besonders gut sind die erfindungsgemäß verwendeten Alkoxylierungsprodukte zur Behandlung von solchen Textilien geeignet, die aus Cellulosefasern bestehen oder mindestens teilweise Cellulosefasern (native und Regeneratcellulosefasern) enthalten. Als Mischfasern kommen dabei sowohl synthetische Fasern, wie Polyester-, Polyamid- oder Polyacrylnitrilfasern, als auch Wolle in Betracht. Selbstverständlich können aber auch Textilien aus Synthesefasern und Wolle ausgerüstet werden.

Die Vorteile der erfindungsgemäß verwendeten Produkte liegen einerseits darin, daß dieselben weitestgehend hydrolysenstabil sind und eine Kombination mit insbesondere sauren Behandlungsmitteln ohne Bedenken möglich ist. Außerdem wird mit diesen Produkten auf den behandelten Textilien ein besonders oberflächenglatter, weicher Griff mit ausgeprägter Brechwirkung erhalten und die Einreißfestigkeit und Scheuerfestigkeit merklich verbessert. Auch die Vernähbarkeit der ausgerüsteten Materialien ist nach der Behandlung sehr gut. Die Effekte liegen dabei über denjenigen nach dem Stand der Technik.

## Herstellung der Alkoxylierungsprodukte

### Produkt A

82 kg Oleylalkohol (305 Mol) und 0,03 kg 20 %ige Natriumoleylatlösung in Oleylalkohol werden vorgelegt, auf 140 °C erhitzt und innerhalb 1 Stunde unter Rühren 18 kg handelsübliches Methylwasserstoffpolysiloxan (Dichte bei 20 °C ca. 1,0 ; Viskosität bei 20 °C 20 bis 30 mPa.s) zugetropft. Anschließend werden 0,15 kg 30 %ige Natriummethylatlösung in Methanol zugesetzt und 20 Minuten bei 140 °C nachgerührt. Das erhaltene Methyloleyloxypolysiloxan spaltet alkalisch keinen Wasserstoff mehr ab.

### Produkt B

Von 285 Mol n-Butanol werden 26,7 Mol vorgelegt und gemeinsam mit 0,03 kg Natriumoleylat 20 %ig in Oleylalkohol auf 118 °C erwärmt. Dann werden von 18 kg Methylwasserstoffpolysiloxan (Daten siehe Produkt A) 1,69 kg zugefügt. Anschließend werden die restlichen Mengen n-Butanol und Methylwasserstoffpolysiloxan gleichzeitig und gleichmäßig innerhalb 1 Stunde zugesetzt, wobei sich unter Erhöhung der Temperatur auf 140 °C Wasserstoff abspaltet. Das erhaltene Alkoxylierungsprodukt enthält noch geringe Mengen alkalisch abspaltbaren, siliciumgebundenen Wasserstoff.

### Produkt C

In der unter Produkt B beschriebenen Weise werden 276 Mol Linoleylalkohol und 18 kg Methylwasserstoffpolysiloxan (Daten siehe Produkt A) bei 140 °C umgesetzt.

### Produkt D

In der unter Produkt B beschriebenen Weise werden 240 Mol n-Undecen-(11)-ol-(1) und 40,2 kg trimethylsilylendblockiertes Silikoncopolymerisat (Cohydrolysat aus Dimethyldichlorsilan und Methylwasserstoffdichlorsilan im Molverhältnis 1 : 1 ; Viskosität bei 10 °C 240 mPa.s) umgesetzt.

### Produkt E

In der unter Produkt B beschriebenen Weise werden 260 Mol 2-Äthylhexanol-(1) und 18 kg Methylwasserstoffpolysiloxan (Daten siehe Produkt A) umgesetzt.

### Produkt F

In der unter Produkt B beschriebenen Weise werden 160 Mol Laurylalkohol und 18 kg Methylwasserstoffpolysiloxan (Viskosität bei 20 °C 50 mPa.s) umgesetzt.

Besonders bevorzugt werden die Alkoxylierungsprodukte in Form wäßriger Emulsionen angewandt. Die Herstellung einer wäßrigen Emulsion der Produkte A bis F kann wie folgt vorgenommen werden :

In einem Ansatzkessel werden 585 l Wasser vorgelegt. In einem separaten Ansatzgefäß werden 33 kg Emulgator ($C_{16-18}$-Fettalkohol, äthoxyliert mit 40 Mol Äthylenoxyd je Mol Fettalkohol) mit 70 l Wasser von 40 bis 60 °C gelöst und in den Ansatzkessel eingefüllt. Dann werden 330 kg des Produktes A einturbiniert und mit halbkonzentrierter Salzsäure auf einen pH-Wert von 7,8 bis 8,5 eingestellt. Abschließend wird bei 20 bis 30 °C und 260 bis 350 bar hochdruckhomogenisiert.

Die Emulgierung der Produkte B bis F gelingt in gleicher Weise, wobei es gegebenenfalls notwendig ist, die Produkte vor der Einturbinierung aufzuschmelzen.

In gleicher Weise können auch andere Emulgatoren und Emulgatormischungen zur Herstellung der Emulsionen verwendet werden, wobei natürlich auch verdünntere und konzentriertere Emulsionen

bereitet werden können.

Es ist außerdem auch möglich, die Alkoxylierungsprodukte vor der Emulgierung in einem wasserungöslichen Lösungsmittel zu lösen und diese Lösung zu emulgieren.

Die bessere Hydrolysenstabilität der erfindungsgemäß verwendeten Alkoxylierungsprodukte ergibt sich aus folgendem Vergleichsversuch :

Je 100 Gewichtsteile der nach Beispiel 1 der DE-B 1 594 911 hergestellten Emulsion werden mit Wasser auf ca. 32 Gew.% Wirksubstanz gebracht und mit Salzsäure auf einen pH-Wert von 1 (Produkt I) und 2 (Produkt II) eingestellt.

In gleicher Weise werden je 100 g der wie oben beschrieben hergestellten Emulsion ebenfalls mit Salzsäure auf einen pH-Wert von 1 (Produkt III) und 2 (Produkt IV) eingestellt.

Die Hydrolysenstabilität wurde über die Lagerstabilität ermittelt :

| | Produkt | Lagerung bei Zimmertemperatur |
|---|---|---|
| I | Stand der Technik | Emulsion nach 5 Tagen fest |
| II | Stand der Technik | Emulsion nach 10 Tagen fest |
| III | erfindungsgemäß | Emulsion nach 1 Monat noch gut |
| IV | erfindungsgemäß | Emulsion nach 1 Monat noch stabil |

Nur die erfindungsgemäßen Emulsionen III und IV sind gegenüber sauren Bestandteilen beständig.

Die erfindungsgemäße Behandlung der Textilien wird wie folgt durchgeführt :

## Beispiel 1

Ein Baumwollpopeline (ca. 124 g/m$^2$) wird mit folgender Flotte auf eine Flottenaufnahme von 75 % foulardiert :

60 g/l des im Beispiel 2 der US-A 4 102 840 verwendeten Mischproduktes,
18 g/l $MgCl_2 \cdot 6H_2O$ und
30 g/l der unter Verwendung des Produktes A hergestellten Emulsion (ca. 32 %ig).

Dann wird 10 Minuten bei 100 °C getrocknet und 5 Minuten bei 150 °C kondensiert.

Die technischen Effekte sind in der nachfolgenden Tabelle wiedergegeben, wobei zum Vergleich noch folgende Ausrüstungen durchgeführt wurden :

Ausrüstung A : Wie oben beschrieben, aber ohne Produkt-A-Emulsion.

Ausrüstung B : Wie oben beschrieben, wobei aber anstelle der Produkt-A-Emulsion die gleiche Menge (bezogen auf Wirksubstanz) einer nach Beispiel 1 der DE-B1 1 594 911 hergestellten Emulsion eingesetzt wurde.

| Ausrüstung | Elmendorf-Einreißfestigkeit (in cN) | Accelerotor-Scheuerfestigkeit 3 000 U/min. und 3 Min. (Abrieb in %) | Griff |
|---|---|---|---|
| erfindungsgemäß | 1 140 | 8,9 | 1 |
| A (Vergleich) | 690 | 12,3 | 5 |
| B (Stand der Technik) | 1 100 | 9,6 | 2-3 |
| unbehandelt | 860 | 4,3 | 3 |

Die Knitterfestigkeit ist bei allen Ausrüstungen in etwa gleich gut.

Für die Griffbeurteilung dient der folgende Schlüssel :

1 = oberflächenglatter, sehr weicher Griff
2 = sehr weicher Griff
3 = weicher Griff
4 = trockener, wenig weicher Griff
5 = trockener, voller Griff

Beispiel 2

Eine Baumwollmaschenware (ca. 100 g/m²) wird mit folgender Flotte auf eine Flottenaufnahme vor 83 % foulardiert :

60 g/l einer 42 %igen wäßrigen Lösung von mit Monoäthanolamin modifiziertem Polymethylolharnstoff,
10 g/l einer 60 %igen wäßrigen Lösung von Pentamethylolmelamintetramethyläther,
50 g/l einer 30 %igen wäßrigen Emulsion von Dimethylpolysiloxan (Viskosität bei 20 °C 680 mPa.s und Polyäthylen im Gewichtsverhältnis 3 : 1,
30 g/l einer unter Verwendung des Produktes B hergestellten Emulsion (36 %ig),
20 g/l einer 30 %igen wäßrigen Formulierung von Kokosfettsäurepolyglykolester (Polyäthylenglyko 400 als Alkoholkomponente) und
14 ml/l einer 35 %igen wäßrigen Lösung von 2-Amino-2-methylpropanolhydrochlorid (pH-Wert 7,5).

Die Ware wird nun 10 Minuten bei 110 °C getrocknet und 6 Minuten bei 145 °C kondensiert. Es wirc ein sehr gut knitterfrei ausgerüstetes Gewebe mit einem angenehmen, spezifisch weichen Griff erhalten

Beispiel 3

Ein Zellwollgewebe (180 g/m²) wird mit einer Flotte bei einem Abquetscheffekt von 92 % foulardiert die im Liter 60 g einer unter Verwendung des Produktes C hergestellten Emulsion (35 %ig) enthält. Das Gewebe wird dann bei 110 °C getrocknet. Es wird ein Material mit einem oberflächenglatten, seh weichen Griff erhalten.

Wird in gleicher Weise eine unter Verwendung des Produktes F hergestellte Emulsion verwendet, sc resultiert auch ein sehr weicher, aber weniger oberflächenglatter Griff.

Beispiel 4

Auf einen Möbelbezugstoff (450 g/m²) werden durch Aufpflatschen 30 g/m², bezogen auf Feststoff folgender Emulsion aufgebracht :

150 g/l einer wäßrigen, 48 %igen, nichtionogenen Copolymeremulsion (Butylacrylat und Vinylaceta im Molverhältnis 3 : 2) ;
20 g/l einer 30 %igen wäßrigen Formulierung von Kokosfettsäurepolyglykolester (siehe Beispiel 2 und
20 g/l einer unter Verwendung des Produktes D hergestellten Emulsion (30 %ig).

Dann wird 1 Minute bei 170 °C getrocknet.

Der Möbelbezugsstoff zeigt in grifflicher Hinsicht die bekannten vorteilhaften Eigenschaften unc außerdem bleibt die Abriebbeständigkeit des Polymerfilms voll erhalten.

Beispiel 5

Ein gebleichter Polyester/Baumwollpopeline 50/50 (102 g/m²) wird mit einer Flotte bei einem Abquetscheffekt von 62 % foulardiert, die

60 g/l einer wäßrigen, 76 %igen Lösung eines mit Methanol verätherten Dimethyloldihydroxyäthylenharnstoffs,
18 g/l $MgCl_2 \cdot 6H_2O$,
0,2 g/l Natriumfluorborat,
40 g/l einer nichtionogenen Emulsion (13,5 % handelsüblicher Silikonkautschuk und 13,5 % Polyäthylen) und
40 g/l der unter Verwendung des Produktes A hergestellten Emulsion

enthält. Danach wird das Gewebe bei 105 °C getrocknet und 5 Minuten bei 150 °C kondensiert. Das Gewebe ist knitterfrei ausgerüstet. Es weist einen angenehm weichen, oberflächenglatten Griff und eine hohe Scheuer- und Einreißfestigkeit auf. Die Vernähbarkeit ist sehr gut.

Beispiel 6

20 g des Produktes E werden in 1 000 g Perchloräthylen gelöst. Mit dieser Lösung wird ei Zellwoll/Polyester-Mouseline 67/33 (152 g/m²) getränkt und auf eine Flottenaufnahme von 120 % abgepreßt. Abschließend wird in üblicher Weise bei 100 bis 110 °C getrocknet. Das ausgerüstete Gewebe weist einen sehr weichen, oberflächenglatten Griff auf.

Beispiel 7

Ein Baumwollkleiderstoff (106 g/m$^2$) wird mit folgender Flotte auf eine Flottenaufnahme von 75 % foulardiert und dann wie im Beispiel 1 beschrieben fertiggestellt:

60 g/l des im Beispiel 2 der US-PS 4 102 840 verwendeten Mischproduktes,
30 g/l der im Beispiel 5 beschriebenen Silikonkautschuk/Polyäthylenemulsion,
6 g/l der nach Beispiel 1(A) der US-A 3 748 275 hergestellten Methylwasserstoffpolysiloxanemulsion,
3 g/l einer nichtionogenen, wäßrigen, etwa 10 %igen Zinkseifeemulsion,
40 g/l einer unter Verwendung des Produktes A hergestellten Emulsion und
18 g/l $MgCl_2 \cdot 6H_2O$.

Das Gewebe ist permanent knitterfrei und hydrophob ausgerüstet und weist einen besonders oberflächenglatten, weichen Griff auf. Die mechanischen Effekte sind hervorragend.

**Ansprüche**

1. Verfahren zum Weichmachen von Textilmaterial durch Aufbringen von verdünnten Mitteln, die Alkoxylierungsprodukte enthalten, und Erhitzen des behandelten Textilmaterials dadurch gekennzeichnet, daß man Alkoxylierungsprodukte mit einer Vielzahl von Alkoxyresten einsetzt, die durch Alkoxylierung eines Wasserstofforganopolysiloxanes mit mindestens einem einwertigen gesättigten und/oder ungesättigten Alkohol mit 4 bis 22 C-Atomen erhalten worden sind.

2. Verfahren nach Anspruch 1, dadurch gekennzeichnet, daß man als Alkoxylierungsprodukt ein solches einsetzt, in welchem die Wasserstoffatome des genannten Wasserstofforganopolysiloxanes zu mindestens 75 Mol% mit den genannten Alkoholen alkoxyliert worden sind.

3. Verfahren nach den Ansprüchen 1 und 2, dadurch gekennzeichnet, daß man als Alkoxylierungsprodukt ein solches einsetzt, in welchem die Wasserstoffatome des genannten Wasserstofforganopolysiloxanes zu mindestens 90 Mol% mit den genannten Alkoholen alkoxyliert worden sind.

4. Verfahren nach den Ansprüchen 1 bis 3, dadurch gekennzeichnet, daß die genannten Wasserstofforganopolysiloxane mit mindestens einem Alkohol mit 4 bis 8 C-Atomen alkoxyliert worden sind.

5. Verfahren nach den Ansprüchen 1 bis 3, dadurch gekennzeichnet, daß die genannten Wasserstofforganopolysiloxane mit mindestens einem ungesättigten Alkohol mit 11 bis 18 C-Atomen alkoxyliert worden sind.

6. Verfahren nach den Ansprüchen 1 bis 5, dadurch gekennzeichnet, daß als zu alkoxylierendes Wasserstofforganopolysiloxan ein Methylwasserstoffpolysiloxan eingesetzt worden ist.

7. Verfahren nach den Ansprüchen 1 bis 6, dadurch gekennzeichnet, daß das Erhitzen des behandelten Textilmaterials bei Temperaturen von 80 bis 110 °C erfolgt.

8. Verfahren nach den Ansprüchen 1 bis 7, dadurch gekennzeichnet, daß das genannte Mittel in Form einer wäßrigen Emulsion eingesetzt wird.

9. Verfahren nach den Ansprüchen 1 bis 7, dadurch gekennzeichnet, daß das genannte Mittel in Form einer Lösung in einem organischen, wasserunlöslichen Lösungsmittel eingesetzt wird.

10. Verfahren nach den Ansprüchen 1 bis 9, dadurch gekennzeichnet, daß das genannte Mittel zusammen mit mindestens einem weiteren in der Textilindustrie üblichem Hilfsmittel eingesetzt wird.

11. Mittel zum Weichmachen von Textilmaterial, dadurch gekennzeichnet, daß es ein Alkoxylierungsprodukt mit einer Vielzahl von Alkoxyresten enthält, das durch Alkoxylierung eines Wasserstofforganopolysiloxans mit mindestens einem einwertigen gesättigten oder ungesättigten Alkohol mit 4 bis 22 C-Atomen erhalten worden ist.

12. Mittel nach Anspruch 11, dadurch gekennzeichnet, daß das Alkoxylierungsprodukt in Form einer wäßrigen Emulsion vorliegt.

13. Mittel nach Anspruch 11, dadurch gekennzeichnet, daß das Alkoxylierungsprodukt in Form einer Lösung in einem organischen, wasserunlöslichem Lösungsmittel vorliegt.

14. Textilmaterial, behandelt nach dem Verfahren der Ansprüche 1 bis 10.

**Claims**

1. Method for the softening of textile material through application of diluted agents which contain alkoxylation products, and heating of the treated textile material characterized in that alkoxylation products with a plurality of alkoxy radicals are used, which have been obtained through alkoxylation of a hydrogen-organopolysiloxane with at least one monovalent saturated and/or unsaturated alcohol with 4 to 22 C-atoms.

2. Method according to Claim 1, characterized in that a product is used as alkoxylation product, in which the hydrogen atoms of the hydrogen-organopolysiloxane indicated have been alkoxylated to at

least 75 molar-% with the alcohols indicated.

3. Method according to the Claims 1 and 2, characterized in that a product is used as alkoxylation product, in which the hydrogen atoms of the hydrogen-organopolysiloxane indicated have been alkoxylated to at least 90 molar-% with the alcohols indicated.

4. Method according to the Claims 1 to 3, characterized in that the hydrogen-organopolysiloxanes indicated have been alkoxylated with at least one alcohol with 4 to 8 C-atoms.

5. Method according to the Claims 1 to 3, characterized in that the hydrogen-organopolysiloxanes indicated have been alkoxylated with at least one unsaturated alcohol with 11 to 18 C-atoms.

6. Method according to the Claims 1 to 5, characterized in that as hydrogen-organopolysiloxane to be alkoxylated, a methyl hydrogen-polysiloxane has been used.

7. Method according to the Claims 1 to 6, characterized in that the heating of the treated textile material takes place at temperatures of 80 to 110 °C.

8. Method according to the Claims 1 to 7, characterized in that the agent indicated is used in the form of an aqueous emulsion.

9. Method according to the Claims 1 to 7, characterized in that the agent indicated is used in the form of a solution in an organic, water-insoluble solvent.

10. Method according to the Claims 1 to 9, characterized in that the agent indicated is used together with at least one further adjuvant which is customary in the textile industry.

11. Agent for the softening of textile material, characterized in that it contains an alkoxylation product with a plurality of alkoxy radicals, which has been obtained through alkoxylation of a hydrogen-organopolysiloxane with at least one monovalent saturated or unsaturated alcohol with 4 to 22 C-atoms.

12. Agent according to Claim 11, characterized in that the alkoxylation product is present in the form of an aqueous emulsion.

13. Agent according to Claim 11, characterized in that the alkoxylation product is present in the form of a solution in an organic, water-insoluble solvent.

14. Textile material, treated according to the method of the Claims 1 to 10.

**Revendications**

1. Procédé d'adoucissement de matériaux textiles par application d'agents dilués contenant des produits d'alcoxylation et chauffage du matériau textile traité, caractérisé en ce que l'on utilise des produits d'alcoxylation avec un grand nombre de résidus alcoxy, qui ont été obtenus par alcoxylation d'un organopolysiloxane hydrogéné avec au moins un monoalcool saturé et/ou insaturé à 4 à 22 atomes de carbone.

2. Procédé selon la revendication 1, caractérisé en ce que l'on utilise en tant que produit d'alcoxylation un produit dans lequel les atomes d'hydrogène de l'organopolysiloxane hydrogéné mentionné ont été alcoxylés à au moins 75 % molaires avec les alcools mentionnés.

3. Procédé selon les revendications 1 et 2, caractérisé en ce que l'on utilise en tant que produit d'alcoxylation un produit dans lequel les atomes d'hydrogène de l'organopolysiloxane hydrogéné mentionné ont été alcoxylés à au moins 90 % molaires avec les alcools mentionnés.

4. Procédé selon les revendications 1 à 3, caractérisé en ce que les organopolysiloxanes hydrogénés mentionnés ont été alcoxylés avec au moins un alcool à 4 à 8 atomes de carbone.

5. Procédé selon les revendications 1 à 3, caractérisé en ce que les organopolysiloxanes hydrogénés mentionnés ont été alcoxylés avec au moins un alcool insaturé à 11 à 18 atomes de carbone.

6. Procédé selon les revendications 1 à 5, caractérisé en ce que l'on a utilisé en tant qu'organopolysiloxane hydrogéné à alcoxyler un méthylhydrogénopolysiloxane.

7. Procédé selon les revendications 1 à 6, caractérisé en ce que le chauffage du matériau textile traité est réalisé à des températures de 80 à 110 °C.

8. Procédé selon les revendications 1 à 7, caractérisé en ce que l'agent mentionné est utilisé sous la forme d'une émulsion aqueuse.

9. Procédé selon les revendications 1 à 7, caractérisé en ce que l'agent mentionné est utilisé sous la forme d'une solution dans un solvant organique insoluble dans l'eau.

10. Procédé selon les revendications 1 à 9, caractérisé en ce que l'agent mentionné est utilisé en même temps qu'au moins un autre adjuvant courant dans l'industrie textile.

11. Produit pour l'adoucissement d'un matériau textile, caractérisé en ce qu'il contient un produit d'alcoxylation avec un grand nombre de résidus alcoxy, lequel a été obtenu par alcoxylation d'un organopolysiloxane hydrogéné avec au moins un monoalcool saturé ou insaturé à 4 à 22 atomes de carbone.

12. Produit selon la revendication 11, caractérisé en ce que le produit d'alcoxylation se présente sous la forme d'une émulsion aqueuse.

13. Produit selon la revendication 11, caractérisé en ce que le produit d'alcoxylation se présente sous la forme d'une solution dans un solvant organique insoluble dans l'eau.

14. Matériau textile, traité par le procédé selon les revendications 1 à 10.